# FASCICULE DE BREVET EUROPEEN

(11) **EP 4 198 651 B1**
(45) Date de publication et mention de la délivrance du brevet: **15.10.2025**
(21) Numéro de dépôt: 21215635.0
(22) Date de dépôt: 17.12.2021
(51) Int. Cl.: G04G 21/08, G04R 60/08, G04R 60/10

(54) **LUNETTE DE MONTRE FORMANT EN TOUT OU PARTIE UNE INTERFACE TACTILE**
AUSSENRING EINER ARMBANDUHR, DER GANZ ODER TEILWEISE EINE BERÜHRUNGSEMPFINDLICHE SCHNITTSTELLE BILDET
WATCH BEZEL IN ALL OR PART FORMING A TOUCH INTERFACE

(43) Date de publication de la demande: 21.06.2023
(73) Titulaire: ETA SA Manufacture Horlogère Suisse, 2540 Grenchen (CH)
(72) Inventeur: STEHLIN, Xavier, 1588 Cudrefin (CH)
(74) Mandataire: ICB SA

(56) Documents cités:
- WO-A1-2019/135856
- US-A1- 2011 298 670
- US-A1- 2018 088 724

## Description

### Domaine technique de l'invention

L'invention concerne une lunette d'une montre électronique formant en tout ou partie une interface tactile, ladite lunette comportant un circuit d'antenne d'un module de communication et un circuit de commande tactile d'un organe de commande tactile de la montre.

### Arrière-plan technologique

On connait dans l'état de la technique de nombreux objets électroniques portables susceptibles de se connecter à des réseaux de communication tels que des montres électroniques qui sont pourvus d'interfaces tactiles classiquement agencées dans les glaces de ces dernières. De telles interfaces tactiles sont utilisées généralement pour améliorer l'interactivité des montres et en simplifier les manipulations en particulier lorsque ces dernières proposent un nombre conséquent de menus et de fonctions.

Afin de pouvoir se connecter à des réseaux de communications tels que des réseaux de type Bluetooth ou encore en lien avec la géolocalisation, de telles montres électroniques comprennent des moyens de communication intégrant classiquement une antenne. Il est connu que la taille optimale d'une telle antenne dépend directement de la longueur d'onde du signal émis/reçu. En effet, une antenne de longueur optimale permet d'envoyer/recevoir un signal en entier et à pleine puissance.

Dans ces montres, l'espace disponible étant limité, une antenne doit disposer d'un design adapté pour s'intégrer dans le boitier de la montre. Et si la montre intègre un moyen de communication radio qui fonctionne sur des fréquences radio (telles que le 2.4 GHz ou 1.5 GHz), la taille du produit devient critique par rapport à la longueur d'onde (120 mm et 200 mm).

Par ailleurs, d'autres contraintes doivent également être prises en compte du fait que ces montres comportent beaucoup de parties métalliques et qu'une antenne doit en être isolée. Le document US 2018/088724 A1 divulgue une montre électronique comprenant une lunette intégrant à la fois une antenne et une interface tactile.

Dans ce contexte, on comprend qu'il existe un besoin de trouver une solution, notamment qui ne présente pas les inconvénients de l'art antérieur.

### Résumé de l'invention

Un des buts de l'invention est de disposer d'une montre électronique comprenant une interface tactile et intégrant un circuit d'antenne ayant une longueur optimale pour envoyer/recevoir un signal en entier et à pleine puissance et venant s'intégrer dans le boitier de cette montre dont le volume d'accueil est limité.

Un autre but de l'invention est d'obtenir une montre électronique dont l'esthétisme, la consommation énergétique et les coûts de fabrication ne soient pas impactés ou peu impactés par l'intégration d'une interface tactile dans une lunette de cette montre.

Un autre but de l'invention est d'obtenir une montre électronique dont l'esthétisme, la consommation énergétique et les coûts de fabrication ne soient pas impactés ou peu impactés par l'intégration d'une interface tactile et d'un circuit d'antenne dans une lunette de cette montre.

Dans ce dessein, l'invention concerne une montre électronique selon la revendication 1.

Dans d'autres modes de réalisation :
- ladite au moins une couche en matériau conducteur formant l'électrode revêt une portion de la face interne définie sous ladite au moins une zone tactile de la face externe à partir d'une technologie de dépôt physique en phase vapeur du matériau conducteur ou d'une technologie d'impression sélective à une échelle micrométrique du matériau conducteur ;
- la couche en matériau conducteur revêtant ladite portion de la face interne présente une surface qui est inférieure à la surface de ladite zone tactile de la face externe ;
- la face interne comprend plusieurs électrodes par zone tactile ;
- ladite au moins une couche en matériau conducteur formant l'électrode est réalisée sur une deuxième portion de la face interne de la lunette ;
- le circuit de commande comprend un microcontrôleur connecté à ladite au moins une électrode par l'intermédiaire d'au moins un élément de liaison électrique ;
- la lunette est fabriquée en au moins un matériau diélectrique et/ou électriquement non conducteur ;
- la montre est une montre connectée comprenant une telle lunette.

### Brève description des figures

D'autres caractéristiques et avantages de la présente invention ressortiront plus clairement de la description détaillée qui suit, faite en liaison avec les figures annexées listées ci-dessous :
- La figure 1 est une représentation schématique d'une montre électronique comprenant une lunette formant en tout ou partie une interface tactile de ladite montre, selon un mode de réalisation de l'invention ;
- La figure 2A est une représentation de la lunette comprenant une paroi pourvue d'une face interne comportant un circuit de commande tactile constitué notamment d'électrodes, selon le mode de réalisation de l'invention ;
- La figure 2B est une vue à plus grande échelle de la partie E illustrée sur la figure 2A, selon le mode de réalisation de l'invention ;
- La figure 3 est une représentation schématique de la disposition des électrodes du circuit de commande tactile et d'un circuit d'antenne de ladite montre sur la face interne de la lunette, selon le mode de réalisation de l'invention ;
- La figure 4 est une représentation schématique de la montre comprenant un module de communication et un organe de commande tactile dont respectivement le circuit d'antenne et le circuit de commande tactile sont agencés sur la face interne de la paroi de la lunette, selon le mode de réalisation de l'invention, et
- La figure 5 représente la lunette de la montre électronique laissant voir par transparence le circuit d'antenne et le circuit de commande tactile, selon le mode de réalisation de l'invention.

### Description détaillée de l'invention

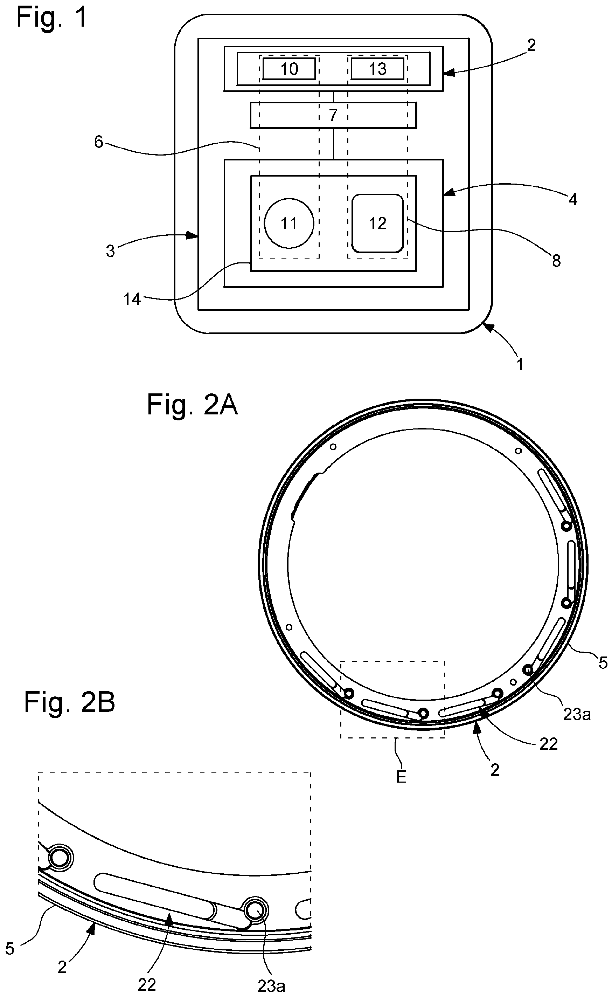

En référence à la figure 1, l'invention porte sur un montre électronique 1 telle qu'une montre connectée.

Dans ce contexte, une telle montre électronique 1 est pourvue d'un boitier 3 comportant une lunette 2 formant en tout ou partie une interface tactile de ladite montre électronique 1 par l'intermédiaire de laquelle un porteur de cette montre 1 peut interagir avec cette dernière dans l'optique de contrôler par exemple des fonctions horlogères de cette montre 1. Ce boitier 3 comporte également une carrure qui peut être réalisée en métal (par ex. en acier, de préférence inoxydable), en un matériau synthétique (par ex. dans un matériau composite comprenant une matrice polymère chargée de fibres, typiquement de carbone) ou en céramique ou encore en au moins un matériau diélectrique et/ou électriquement non conducteur. Le boitier 3 comprend aussi un fond et une glace qui participent à former avec la carrure, une enceinte de ce boitier 3. Dans une telle enceinte, sont agencés notamment un dispositif d'affichage 7 et un dispositif électronique 4 de ladite montre électronique 1.

Le dispositif d'affichage 7 comporte des éléments d'affichage pouvant être analogiques comme des aiguilles et/ou digitales comme un écran LCD, LED ou encore OLED. Un tel dispositif d'affichage 7 est localisé entre la glace et le dispositif électronique 4, un espaceur ou rehaut pouvant être agencé entre la glace et ce dispositif d'affichage 7.

S'agissant du dispositif électronique 4, il comprend un mouvement horloger électronique. Il est configuré pour fournir au moins une information devant être affichée sur ce dispositif d'affichage 7. Ce dispositif électronique 4 comporte de manière non exhaustive et non limitative un module de communication 6, un module de contrôle de la montre électronique, un accumulateur d'énergie électrique notamment une batterie ainsi que différents capteurs comme par exemple des capteurs participant à la détermination d'une géolocalisation, d'une altitude ou d'une température d'un lieu ou encore dans la détermination de paramètres physiologiques, biométriques, vitaux et/ou comportementaux du porteur de la montre électronique 1.

On notera que dans cette configuration, le module de contrôle permet au porteur d'une telle montre électronique 1 de pouvoir interagir avec cette dernière notamment en pouvant activer/désactiver/sélectionner différentes fonctions - par exemple des fonctions horlogères - susceptibles d'être mises en œuvre par cette montre électronique 1. Ce module de contrôle comprend un organe de commande tactile 8 et dans des alternatives d'autres organes de commande tels que des poussoirs ou des boutons agencés sur la carrure.

Dans le dispositif électronique 4, le module de communication 6 comprend un circuit d'antenne 10 connecté à un microcircuit 11, et l'organe de commande tactile 8 comprend un microcontrôleur 12 connecté à un circuit de commande tactile 13. Ainsi que nous le verrons par la suite, le circuit d'antenne 10 et le circuit de commande 13 sont agencés sur une face interne 16 de la lunette 2, cette dernière formant en tout ou partie une interface tactile de la montre électronique 1.

Une telle lunette 2 est de préférence fixée sur la carrure du boitier 3. Cette lunette 2 peut être une pièce fixée de manière amovible sur la carrure ou encore une pièce venue de matière avec cette carrure. Il peut s'agir d'une pièce monobloc ou à l'inverse d'une pièce formée de deux parties reliées entre elles de manière réversible et/ou étanche. La lunette 2 comprend un corps 5 pourvu de la face interne 16 évoquée précédemment et d'une face externe 17. La face externe 17 est une face visible de cette lunette 2 par le porteur qui peut être manipulée notamment au niveau de première et deuxième zones tactiles 18a, 18b définies sur cette face. La lunette 2 peut comprendre sur sa face externe 17 une graduation. Dans l'exemple illustré, la graduation comprend des index figuratifs 24 qui se présentent sous la forme de chiffres (de préférence arabes).

Afin que le circuit d'antenne 10 et le circuit de commande 13 fonctionnent de manière efficace et/ou optimale, cette lunette 2 est réalisée dans au moins un matériau diélectrique et/ou électriquement non conducteur. Ledit au moins un matériau permet de contribuer à la réalisation de l'effet capacitif de l'organe de commande tactile 8. Ce matériau participe aussi à ne pas détériorer le rayonnement du circuit d'antenne 10, d'agrandir sa longueur électrique et d'améliorer son rendement par rapport à sa taille physique. Un tel matériau peut être par exemple un polymère, du titane ou une céramique, ou tout autre matériau de synthèse. On notera qu'il est possible que tout le corps 5 de cette lunette 2 ne soit pas réalisé dans ce type de matériau mais que seulement des portions de ce corps 5 :
- dans lesquelles sont agencés le circuit d'antenne 10 et le circuit de commande 13 soient réalisées en ce matériau, et/ou
- comprenant les première et deuxième zones tactiles 18a, 18b de la face extérieure de lunette 2 soient réalisées en ce matériau.

Ainsi que nous l'avons évoqué, une telle lunette 2 est localisée au niveau de la carrure et enserre la glace. Il peut s'agir d'une lunette tournante ou d'une lunette fixe. La lunette 2 peut également être agencée dans le boitier 3 afin de ne former qu'une seule pièce avec la carrure c'est-à-dire une carrure-lunette. Dans cette variante, la carrure et la lunette présente alors une face externe 17 qui est la face visible par le porteur de cette montre 1.

Le corps 5 de cette lunette 2 peut comprendre des aménagements visant à donner accès à un circuit imprimé 14 du dispositif électronique 4 comportant le microcontrôleur 12 de l'organe de commande 8 et le microcircuit 11 du module de communication 6. De tels aménagements offrent ainsi la possibilité de constituer un passage dans ce corps 5 de la lunette 2 afin de connecter le circuit de commande 13, en particulier les électrodes 22, et le circuit d'antenne 10 respectivement au microcontrôleur 12 de l'organe de commande 8 et au microcircuit 11 du module de communication 6.

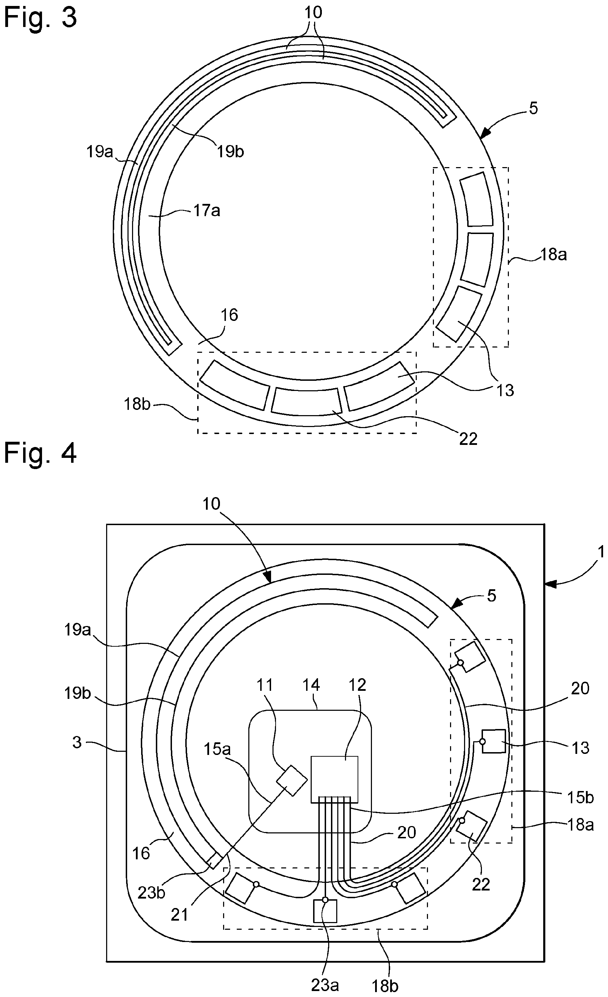

En référence aux figures 2A à 4, l'organe de commande 8 comprend le microcontrôleur 12 qui est connecté au circuit de commande tactile 13. Un tel circuit de commande tactile 13 comprend au moins une couche en matériau conducteur formant une électrode 22 localisée sous une des première et deuxième zones tactiles 18a, 18b de la face externe 17 du corps 5 de la lunette 2. Autrement dit chaque électrode 22 est formée par la couche en matériau conducteur ou se présente sous la forme d'une telle couche. Une telle électrode 22 possède une forme circulaire ou parallélépipédique voir triangulaire. Cette couche en matériau conducteur formant l'électrode 22 revêt donc une portion de la face interne 16 définie sous l'une ou l'autre des zones tactiles de la face externe 17. On notera que la couche en matériau conducteur revêtant ladite portion de la face interne 16 présente une surface qui est inférieure à la surface de chaque zone tactile de la face externe 17.

Cette électrode 22 peut comprendre une borne de connexion 23a visant à la relier/connecter au microcontrôleur 12 de l'organe de commande 8. Dans cette configuration, le circuit de commande 13 comprend un élément de liaison électrique 20 susceptible de réaliser la connexion entre chaque électrode 22 et le microcontrôleur 12. Cet élément de liaison 20 est apte à coopérer avec au moins une piste électrique 15b du circuit imprimé 14 du dispositif électronique 4 comprenant le microcontrôleur 12. De cette manière, chaque électrode 22 est ainsi connectée au microcontrôleur 12 à partir de cet élément de liaison 20 et de ladite au moins une piste électrique 15b. On remarquera enfin que le circuit de commande tactile 13 comprend de préférence autant d'éléments de liaison 20 que la face interne 16 de la lunette 2 comprend d'électrodes 22.

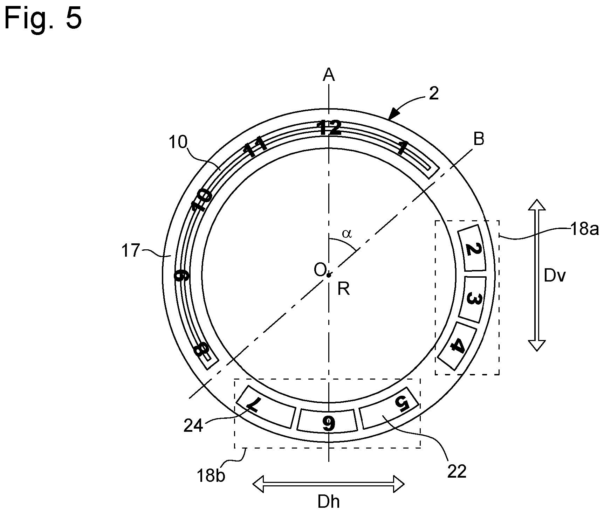

En référence aux figures 2A à 5, l'organe de commande tactile 8 comprend six électrodes 22 réparties sur la face interne 16 du corps 5 de la lunette 2. Plus précisément, ces électrodes 22 sont appliquées/déposées sur cette face interne 16 de manière à définir/former les deux zones tactiles 18a, 18b distinctes sur la face externe 17 de cette lunette 2, ces deux zones tactiles 18a, 18b formant ainsi l'interface tactile de la montre électronique 1. Dans cette configuration, la face interne 16 comprend plusieurs électrodes 22 par zone tactile 18a, 18b. La première zone tactile 18a comprend trois électrodes 22 agencées respectivement sous les index 24 deux, trois et quatre définis sur la face externe 17 de la lunette 2. La deuxième zone tactile 18b comprend également trois électrodes 22 agencées respectivement sous les index 24 cinq, six et sept définis sur cette face externe 17 de la lunette 2. Dans cette configuration, la première zone tactile 18a permet au porteur de la montre 1 d'interagir avec cette dernière en effectuant un déplacement en particulier un « déplacement vertical » (référencé Dv sur la figure 5) d'un accessoire tel qu'un stylet ou encore d'une extrémité d'un de ses membres comme un doigt sur cette première zone 18a. S'agissant de la deuxième zone tactile 18b, elle permet au porteur de la montre 1 d'interagir avec cette dernière en effectuant un déplacement en particulier un « déplacement horizontal » (référencé Dh sur la figure 5) d'un tel accessoire ou encore de l'extrémité d'un de ses membres sur cette zone 18b. Le déplacement vertical décrit une trajectoire qui est sensiblement parallèle ou parallèle à un axe de symétrie A de la lunette 2 passant par le centre O de cette lunette 2 et cette trajectoire étant aussi sensiblement perpendiculaire ou perpendiculaire à un axe de révolution R de cette lunette 2. S'agissant du déplacement horizontal, il décrit une trajectoire qui est quant à elle sensiblement perpendiculaire ou perpendiculaire à cet axe A (ou à la trajectoire décrite par le déplacement vertical) et aussi perpendiculaire à l'axe de révolution R de cette lunette 2. Un tel axe A sépare la lunette 2 en deux parties/portions égales en reliant les index 24 douze et six présents sur la face externe 17 de cette lunette 2.

Dans le dispositif électronique 4, le module de communication 6 est apte permettre la connexion de le montre électronique 1 à un réseau de communication de type Bluetooth. Autrement dit le module de communication 6 est configuré pour communiquer selon un protocole de type Bluetooth. De manière alternative, ce module de communication 6 peut être apte à permettre la connexion de la montre 1 à un réseau de localisation par satellite GNSS (Geolocation and Navigation Satellite System), tel que par exemple le GPS (Global Positioning System), Glonass ou Galileo. Ce module de communication 6 comprend le circuit d'antenne 10 connecté au microcircuit 11.

Dans le présent mode de réalisation, un tel circuit d'antenne 10 est compris sur la face interne 16 du corps 5 de la lunette 2. Ce circuit d'antenne 10 comprend des premier et deuxième brins 19a, 19b présentant chacun une extrémité proximale et une extrémité distale, et s'étendant en parallèle entre leurs extrémités proximales et distales. Dans ce circuit d'antenne 10, l'architecture à deux brins en parallèle permet d'élargir la bande de fréquence (100MHz), nécessaire par exemple pour communiquer sur un réseau de communication de type Bluetooth (2.4 GHz). Dans ce circuit d'antenne 10, les premier et deuxième brins 19a, 19b sont connectés par leurs extrémités distales ainsi qu'au niveau de leurs extrémités proximales. Dans cette configuration, le circuit d'antenne 10 s'étend essentiellement selon une trajectoire en arc de cercle en comportant deux brins 19a, 19b agencés en parallèle sur la face interne 16 qui suit cette trajectoire. Ce circuit d'antenne 10 comprend également un élément de liaison électrique 21 relié à une borne de connexion 23b comprise sur la face interne 16 connectée à ces extrémités proximales ou distales. Cet élément de liaison électrique 21 est apte à coopérer avec au moins une piste électrique 15a du circuit imprimé 14 du dispositif électronique 4 comprenant le microcircuit 11 du module de communication 6. De cette manière, le circuit d'antenne 10 est connecté à ce microcircuit 11 à partir de ce dit élément de liaison électrique 21 et de ladite au moins une piste électrique 15a.

Dans cette configuration, le circuit d'antenne 10 et le circuit de commande tactile 13 sont localisés dans la lunette 2 de part et d'autre d'un axe de symétrie B passant par le centre O de la lunette 2 et qui est sensiblement perpendiculaire ou perpendiculaire à l'axe de révolution R de cette lunette 2. Cet axe référencé B sépare la lunette 2 en deux parties/portions et forme un angle α avec l'axe A qui est compris entre 30 et 40 degrés et qui est de préférence de 36 degrés. Ainsi, le circuit d'antenne 10 et le circuit de commande tactile 13 sont en tout ou partie réalisés sur des portions distinctes de la face interne 16 du corps 5 de la lunette 2. Ces deux portions sont séparées par l'axe de symétrie B. Plus précisément, la face interne 16 de la lunette 2 comprend deux portions présentant sensiblement une même surface ou de même surface. Cette première portion comprend les premier et deuxième brins 19a, 19b ainsi que la borne de connexion 23b de ce circuit d'antenne 10. La deuxième portion comprend quant à elle les électrodes 22.

On notera en outre que le circuit de commande 13 et le circuit d'antenne 10 peuvent être réalisés sur cette face interne 16 du corps 5 de la lunette 2 à partir d'une technologie de dépôt physique en phase vapeur d'un matériau conducteur ou d'une technologie d'impression sélective à une échelle micrométrique de ce matériau conducteur comprenant une encre conductrice. Des technologies de sérigraphie par de l'argent sur une face interne 16 en polyester ou par du cuivre sur une face interne 16 en polyimide est aussi envisageable.

## Revendications

1. Montre électronique (1) comprenant un boitier pourvu d'une lunette (2) formant en tout ou partie une interface tactile de ladite montre (1), ladite lunette (2) comprenant un circuit d'antenne (10) d'un module de communication (6) et étant pourvue d'un corps (5) comprenant des faces interne et externe (16, 17), la face interne (16) comprenant un circuit de commande tactile (13) d'un organe de commande tactile (8) de cette montre (1) et la face externe (17) comprenant au moins une zone tactile (18a, 18b), ledit circuit de commande tactile (13) comprenant au moins une couche en matériau conducteur formant une électrode (22) localisée sous ladite au moins une zone tactile (18a, 18b), **caractérisé en ce que** le circuit d'antenne (10) et le circuit de commande tactile (13) sont localisés dans la lunette (2) de part et d'autre d'un axe de symétrie (B) passant par le centre de la lunette (2), le circuit d'antenne (10) comprenant des premier et deuxième brins (19a, 19b) réalisés sur une première portion de la face interne (16), lesdits premier et deuxième brins (19a, 19b) présentant chacun une extrémité proximale et une extrémité distale, et s'étendant en parallèle entre leurs extrémités proximales et distales, les premier et deuxième brins (19a, 19b) étant connectés par leurs extrémités distales ainsi qu'au niveau de leurs extrémités proximales, un tel circuit d'antenne (10) comprenant un microcircuit (11) connecté aux premier et deuxième brins (19a, 19b) par l'intermédiaire d'un un élément de liaison électrique (21).

2. Montre électronique (1) selon la revendication précédente, **caractérisée en ce que** ladite au moins une couche en matériau conducteur formant l'électrode (22) revêt une portion de la face interne (16) définie sous ladite au moins une zone tactile de la face externe (17) à partir d'une technologie de dépôt physique en phase vapeur du matériau conducteur ou d'une technologie d'impression sélective à une échelle micrométrique du matériau conducteur.

3. Montre électronique (1) selon l'une quelconque des revendications précédentes, **caractérisée en ce que** la couche en matériau conducteur revêtant ladite portion de la face interne (16) présente une surface qui est inférieure à la surface de ladite zone tactile de la face externe (17).

4. Montre électronique (1) selon l'une quelconque des revendications précédentes, **caractérisée en ce que** la face interne (16) comprend plusieurs électrodes (22) par zone tactile.

5. Montre électronique (1) selon l'une quelconque des revendications précédentes, **caractérisée en ce que** ladite au moins une couche en matériau conducteur formant l'électrode (22) est réalisée sur une deuxième portion de la face interne (16) de la lunette (2).

6. Montre électronique (1) selon l'une quelconque des revendications précédentes, **caractérisée en ce que** le circuit de commande (13) comprend un microcontrôleur (12) connecté à ladite au moins une électrode (22) par l'intermédiaire d'au moins un élément de liaison électrique (20).

7. Montre électronique (1) selon l'une quelconque des revendications précédentes, **caractérisée en ce que** la lunette (2) est fabriquée en au moins un matériau diélectrique et/ou électriquement non conducteur.

8. Montre électronique (1) selon l'une quelconque des revendications précédentes, **caractérisée en ce qu'**elle est une montre notamment une montre connectée comprenant la lunette (2).

## Patentansprüche

1. Elektronische Armbanduhr (1), umfassend ein Gehäuse mit einer Lünette (2), die ganz oder teilweise eine taktile Benutzerschnittstelle der Uhr (1) bildet, wobei die Lünette (2) einen Antennenschaltkreis (10) eines Kommunikationsmoduls (6) umfasst und einen Körper (5) mit einer Innen- (16) und einer Außenseite (17) aufweist, wobei die Innenseite (16) einen taktilen Steuerkreis (13) eines taktilen Bedienelements (8) der Uhr (1) und die Außenseite (17) mindestens einen taktilen Bereich (18a, 18b) umfasst, wobei der taktile Steuerkreis (13) mindestens eine Schicht aus leitfähigem Material aufweist, die eine unter dem mindestens einen taktilen Bereich (18a, 18b) angeordnete Elektrode (22) bildet, **dadurch gekennzeichnet, dass** der Antennenschaltkreis (10) und der taktile Steuerkreis (13) in der Lünette (2) beidseitig einer durch das Zentrum der Lünette (2) verlaufenden Symmetrieachse (B) angeordnet sind, wobei der Antennenschaltkreis (10) erste und zweite Leiterbahnen (19a, 19b) umfasst, die auf einem ersten Abschnitt der Innenseite (16) angeordnet sind, wobei die ersten und zweiten Leiterbahnen (19a, 19b) jeweils ein proximales und ein distales Ende aufweisen und sich zwischen diesen Enden parallel erstrecken, wobei die ersten und zweiten Leiterbahnen (19a, 19b) sowohl an ihren distalen als auch an ihren proximalen Enden miteinander verbunden sind, und wobei der Antennenschaltkreis (10) einen integrierten Schaltkreis (11) umfasst, der über ein elektrisches Verbindungselement (21) mit den ersten und zweiten Leiterbahnen (19a, 19b) verbunden ist.

2. Elektronische Armbanduhr (1) nach dem vorhergehenden Anspruch, **dadurch gekennzeichnet, dass** die mindestens eine Schicht aus leitfähigem Material, welche die Elektrode (22) bildet, einen Abschnitt der Innenseite (16) überzieht, der unterhalb des mindestens einen taktilen Bereichs der Außenseite (17) liegt, und mittels eines physikalischen Gasphasenabscheidungsverfahrens des leitfähigen Materials oder mittels eines selektiven Druckverfahrens im mikrometergenauen Maßstab aufgebracht ist.

3. Elektronische Armbanduhr (1) nach einem der vorhergehenden Ansprüche, **dadurch gekennzeichnet, dass** die leitfähige Schicht, die den betreffenden Abschnitt der Innenseite (16) überzieht, eine Fläche aufweist, die kleiner ist als die Fläche des entsprechenden taktilen Bereichs auf der Außenseite (17).

4. Elektronische Armbanduhr (1) nach einem der vorhergehenden Ansprüche, **dadurch gekennzeichnet, dass** die Innenseite (16) mehrere Elektroden (22) je taktilem Bereich umfasst.

5. Elektronische Armbanduhr (1) nach einem der vorhergehenden Ansprüche, **dadurch gekennzeichnet, dass** die mindestens eine Schicht aus leitfähigem Material, welche die Elektrode (22) bildet, auf einem zweiten Abschnitt der Innenseite (16) der Lünette (2) ausgebildet ist.

6. Elektronische Armbanduhr (1) nach einem der vorhergehenden Ansprüche, **dadurch gekennzeichnet, dass** der Steuerschaltkreis (13) einen Mikrocontroller (12) umfasst, der mit der mindestens einen Elektrode (22) über mindestens ein elektrisches Verbindungselement (20) verbunden ist.

7. Elektronische Uhr (1) nach einem der vorhergehenden Ansprüche, **dadurch gekennzeichnet, dass** die Lünette (2) aus mindestens einem dielektrischen und/oder elektrisch nicht leitenden Material hergestellt ist.

8. Elektronische Armbanduhr (1) nach einem der vorhergehenden Ansprüche, **dadurch gekennzeichnet, dass** es sich um eine Uhr, insbesondere eine vernetzte Uhr (Smartwatch), handelt, welche die Lünette (2) umfasst.

## Claims

1. An electronic watch (1) comprising a case provided with a bezel (2) entirely or partially forming a tactile interface of said watch (1), said bezel (2) comprising an antenna circuit (10) of a communication module (6) and being provided with a body (5) comprising inner and outer faces (16, 17), the inner face (16) comprising a tactile control circuit (13) of a tactile control member (8) of this watch (1) and the outer face (17) comprising at least one tactile area (18a, 18b), said tactile control circuit (13) comprising at least one layer made of a conductive material forming an electrode (22) located beneath said at least one tactile area (18a, 18b), **characterised in that** the antenna circuit (10) and the tactile control circuit (13) are located within the bezel (2) on either side of an axis of symmetry (B) passing through the centre of the bezel (2), the antenna circuit (10) comprising first and second strands (19a, 19b) formed over a first portion of the inner face (16), said first and second strands (19a, 19b) having a proximal end and a distal end, and extending in parallel between their proximal and distal ends, the first and second strands (19a, 19b) being connected by their distal ends as well as at their proximal ends, such an antenna circuit (10) comprising a microcircuit (11) connected to the first and second strands (19a, 19b) via an electrical connecting element (21).

2. The electronic watch (1) according to the preceding claim, **characterised in that** said at least one layer made of a conductive material forming the electrode (22) coats a portion of the inner face (16) defined beneath said at least one tactile area of the outer face (17) according to a technology of physical vapour deposition of the conductive material or a technology of micrometric-scale selective printing of the conductive material.

3. The electronic watch (1) according to any one of the preceding claims, **characterised in that** the layer made of a conductive material coating said portion of the inner face (16) has a surface area which is smaller than the surface area of said tactile area of the outer face (17).

4. The electronic watch (1) according to any one of the preceding claims, **characterised in that** the inner face (16) comprises several electrodes (22) per tactile area.

5. The electronic watch (1) according to any one of the preceding claims, **characterised in that** said at least one layer made of a conductive material forming the electrode (22) is formed over a second portion of the inner face (16) of the bezel (2).

6. The electronic watch (1) according to any one of the preceding claims, **characterised in that** the control circuit (13) comprises a microcontroller (12) connected to said at least one electrode (22) via at least one an electrical connecting element (20).

7. The electronic watch (1) according to any one of the preceding claims, **characterised in that** the bezel (2) is manufactured of at least one dielectric and/or electrically non-conductive material.

8. The electronic watch (1) according to any one of the preceding claims, **characterised in that** it is a watch in particular a smartwatch comprising the bezel (2).
